# EUROPEAN PATENT SPECIFICATION

(11) **EP 4 133 445 B1**
(45) Date of publication and mention of the grant of the patent: **20.11.2024**
(21) Application number: 21783841.6
(22) Date of filing: 17.03.2021
(51) Int. Cl.: H04W 4/029, H04L 9/00, G06Q 10/083, H04L 9/32

(54) **DESIGNING EXPORT PLATFORM WITH IMPROVED BLOCKCHAIN AND INTERNET OF THINGS STRUCTURE**
ENTWURF EINER EXPORTPLATTFORM MIT VERBESSERTER BLOCKCHAIN UND INTERNET-DER-DINGE-STRUKTUR
CONCEPTION DE PLATEFORME D'EXPORTATION À CHAÎNE DE BLOCS AMÉLIORÉE ET STRUCTURE DE L'INTERNET DES OBJETS

(30) Priority: 06.04.2020 TR 202005426
(43) Date of publication of application: 15.02.2023
(73) Proprietor: Atez Yazilim Teknolojileri A. S., Sariyer/Istanbul (TR)
(72) Inventor: GULER, Kenan, 34520 Sariyer/Istanbul (TR)
(74) Representative: Atalay, Baris
(86) International application number: PCT/TR2021/050242
(87) International publication number: WO 2021/206654

(56) References cited:
- EP-A2- 3 506 549
- US-A1- 2017 373 526
- US-A1- 2018 232 693
- US-A1- 2019 114 714
- US-A1- 2020 051 015

## Description

### TECHNICAL FIELD

In general, the present invention relates to a secure and easy-to-use trade platform usable thanks to incorporation with blockchain technology, in which certain data verified via the Internet of Things are automatically received and processed by smart contracts. In particular, the present invention relates to secure tracking of sensor data by enabling integration of the Internet of Things with blockchain technology for crossborder movement of commodities.

### PRIOR ART

The blockchain technology provides a digital infrastructure for digital assets and digital twinned objects, acts as a distributed database or shared ledger. These blockchains may be public or private. The capability of keeping said data within a blockchain is of utmost importance for data security, transparency, integrity and accelerating transactions between numerous stakeholders. Traditionally, in commercial activities, documents and information migrate as signed paperwork or e-signed documents between institutions in the same country and between international institutions. Application of said traditional business practices cause delays in activities, and creation, approval, signing of paper documents, delivering them to relevant parties and such parties controlling thereof and scanning and extraction of data therefrom, lead to delays and additional costs throughout the entire trade process. These procedures require the same data to be recurrently entered to a system by separate parties. Such traditional processes slow down the proceeding of a system and cause errors in operation. E-signed documents also go through parallel processes with signed paper documents. Conversely, the processes for signature verification and copy distribution are improved. Apart from these, all problems relating to paper documents also apply to e-signed electronic documents.

The present invention enables minimizing user errors by automatically entering information contained in an electronic document, together with data from sensors, through adaptation of the Internet of Things in a blockchain system. In addition, in goods transportation tracking process, parameters such as entry-exit information, temperature and humidity information, and the condition of the doors of the vehicles used for transportation, are incorporated into a blockchain network and kept in event log format. Traditional transportation methods comprise visual inspection to track the goods and manual reports are kept as a result of such inspection. Contrary to other methods, the present invention enables management of Internet of Things solutions used in import and export flows and allows keeping these actions as event logs on a blockchain. The present invention relates to adaptation of the Internet of Things and, in general to RFID, GPS, GSM and blockchain technologies.

The blockchain platform provides data, required to track the properties and state of preferred items. Information about the items are transmitted from the platform to RFID tags by means of a portable RFID printer, then the tags are mounted onto the items and onto the boxes containing the items which are to be tracked throughout their transportation from the departing warehouse to the arrival warehouse. In addition, the blockchain infrastructure is integrated with CO₂, humidity and temperature sensors provided in a vehicle, a magnetic sensor provided on the back doors of the truck and at least two tension sensors provided on its trailer cover.

The state of the art document US-2020/0,019,923 mentions one or more processes verifying an expiration date of receiving, by a blockchain node, a first transaction comprising an asset identifier and the expiration date.

The state of the art document US2018/232693 A1 discloses a plurality of linked distributed ledgers (e.g., a first distributed ledger relating to a first set of shipment units and a second distributed ledger relating to a second set of shipment units associated with the first set of shipment units), each providing varying information/data regarding respective asset types (e.g., shipment units and/or associated shipment units).

The document US-102,757,739 which is another state of the art teaching, discloses a system in which a blockchain of transactions may be referenced for various purposes and may be later accessed by interested parties for ledger verification. An exemplary process method may comprise reading a tag attached to an object, transmitting the request to update the asset state of an asset in a blockchain, receiving a verification confirmation according to the content of the request and updating the condition of the object.

According to the teaching of the document EP-3,563,318, a first blockchain node sends, to a consensus network, a business request generated in accordance with commercial information sent by a user. The first blockchain node executes a first designated operation by triggering a first smart contract in the business request. The request sent by the first blockchain node passes the passes the verification carried out by a second block chain node. Also, the second blockchain node may verify a business result obtained by a third block chain node. Therefore, it is noted that the entire business processing procedure is provided with a system of impartiality, thereby greatly achieving impartiality of business processing.

One of the principal aims of the invention is to provide actual data verified in a trade platform by using blockchain technology.

Another aim of the invention is to enable sharing data with data privacy rules in a trust environment provided by applying business rules encoded as smart contracts. Another aim of the invention is to reduce the need for manual processes by using e-signed digital data instead of e-signed documents.

Another aim of the invention is to provide transparency by enabling changes on verified actual data to be managed by the parties.

By means of verified actual data, tamper-resistance and smart contracts provided by the blockchain technology, the present invention aims to reduce disputes, provide transparency, decrease manual processes, avoid errors induced by manual processes, accelerate processes and lower costs. Sensor data being tracked and incorporated to the processes thanks to integration of the Internet of Things, enable reducing erroneous manual inputs and simultaneous item tracking. Transparency is provided throughout shipment by end-to-end tracking of item shipment through use of RFID technology in preferred intervals. Other security elements such as CO₂, tension and magnetic door sensors are included. In addition, solutions are supported such as automatic opening or closing of warehouse doors or truck trailer doors by use of Internet of Things solutions controlled by smart contracts where necessary. The influence of human factor on physical elements in trade processes are aimed to be reduced by adaptation of the Internet of Things.

It is an object of the present invention to eliminate or at least alleviate the described problems. This object is achieved by a main device and method in accordance with the appended claims 1 and 4. Preferred embodiments are defined in the dependent claims.

### BRIEF DESCRIPTION OF THE DRAWINGS

The figures whose descriptions are given below, aim to exemplify integration of the Internet of Things with a blockchain-based consensus network whose advantages with respect to the state of the art are already summarized above and will be discussed in detail hereinafter.

The figures should not to be construed as limiting the scope of protection as defined in the claims, and are not to be referenced solely in interpreting the scope of said claims without regarding the technique in the description.
Figure 1 shows a portable reader according to an embodiment of present invention.
Figure 2 shows a main device according to an embodiment of the present invention.
Figure 3 is a view of sensor and Internet of Things solutions on a goods transporter according to an embodiment of the present invention.
Figure 4 is a diagram showing the communication between an departing and arrival point according to an embodiment of the present invention.
Figure 5 is a diagram showing the document flow between loading and export declaration creation according to an embodiment of the present invention.
Figure 6 is a diagram showing the document flow between export declaration and delivery point according to an embodiment of the present invention.
Figure 7a, 7b and 7c are views of the export data flowchart according to an embodiment of the present invention.

### DETAILED DESCRIPTION OF THE INVENTION

The following numerals are referred to in the detailed description of the present invention:
10) CO₂ sensor
11) Tension sensor
12) Magnetic door sensor

The system of the present invention relates to adaptation of blockchain technology and the Internet of Things. By means of modules consisting of smart contracts, the system enables operating processes by receiving data or documents in a rule-based manner from software programs which manage the internal processes of all stakeholders or any process, and by distributing these data or documents to the nodes and stakeholders who are enabled to view them according to said rules. Furthermore, the present invention provides end-to-end security and trackability of cargo in national and international transport networks both on sea routes and land routes.

An Internet of Things integrated blockchain platform of the of the present invention enables asset information to be stored in a blockchain, status information to be stored in a blockchain, and certain security measures to be taken before approving asset state changes. Some embodiments of the present invention comprise utilization of a blockchain distributed ledger to track assets. Asset contents, shipments, products and devices can contain multiple products. Tracked assets are matched with RFID (radio frequency identification) tags used to uniquely identify each particular asset. In some embodiments of the present invention, a tag identifier may be the main identifier used in the ledger to determine whether a ledger update for a particular asset is actually from a source that owns the asset.

The present invention enables end-to-end trackability and security throughout international maritime and land transportation by providing a secure operation by means of a series of electronic devices equipped with various sensors. The invention aims to resolve a series of problems such as real-time trackability of goods, theft, destruction or end-user errors, through convergence of the Internet of Things and blockchain application. Adaptation of the Internet of Things consists in five main elements. Namely, a handheld RFID printer device capable of sending data in warehouses, an RFID reader device capable of sending data, equipped with various sensors (CO₂ sensor (10), trailer cover tension sensor (11) and magnetic door sensor (12)) depending on type of transport (maritime, land or air), RFID tags and blockchain platform interfaces.

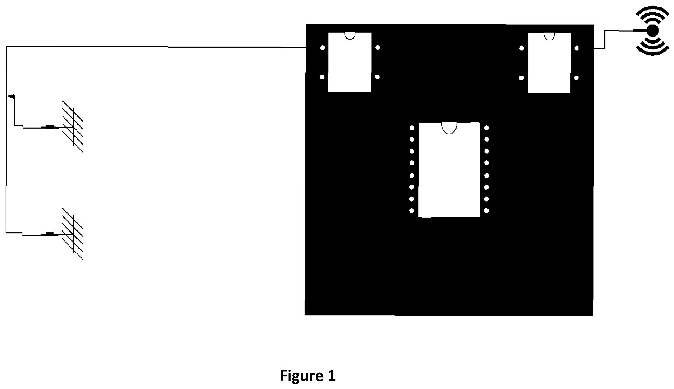

Figure 1 shows an RFID reader provided to identify an asset defined by using a blockchain according to various implementation modes. According to an embodiment mode of the present invention, the asset can be a box, crate or product and the tag can be a wireless tag having one or more processors, a memory, a receiver and a transceiver. The tag is an RFID tag attached to the asset by means of a magnet or another fastening mechanism. According to an embodiment of the invention, the tag can be integrated into the body of the asset. The tag can comprise a memory with radio communication functions, capable of storing product information and other data. During an operation, a reader is in communication with a computer system which can communicate with a blockchain or other data storage systems. When a product is shipped from a location, the blockchain record is updated for the incoming asset and asset state at another location. According to an implementation mode of the present invention , the portable handheld reader device comprises an integrated circuit, a screen, a nano-chip, a GSM/GPS/GPRS chip, a SIM card, a passive GPS antenna, a GSM antenna, a battery and an RFID antenna.

The RFID tag memory may comprise a nonce if the asset had not been updated previously. A nonce is a random or a pseudo-random number that can be used only once to log-in to a blockchain for a creation process. According to an embodiment mode of the present invention, the RFID reader can scan a tag and generate a tag identifier and other distributed ledger data or information substituted from other information sources to complete the required data inputs when data is being stored to the blockchain platform. Such information can include data of time, number of transactions, product properties and information about the blockchain.

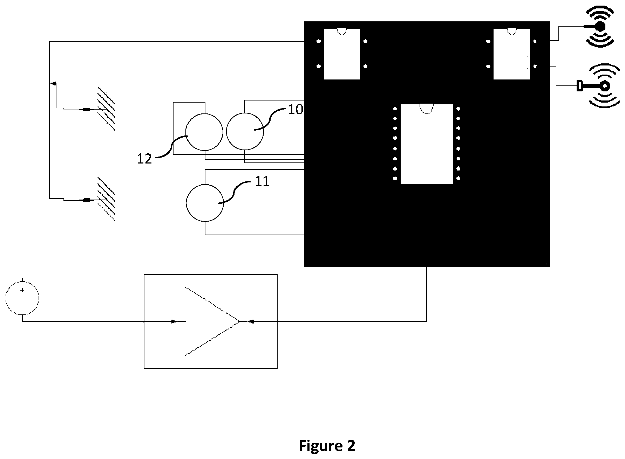

Figure 2 shows the main tracking device enabling the assets to be tracked when they are loaded in a truck or a container. Adaptation of the Internet of Things is enabled by an integrated card, a nano-chip, GSM/GPS/GPRS chip, SIM card, passive GPS antenna, GSM antenna, RFID antennas, CO₂ sensor (10), tension sensors (11), a magnetic door sensor (12) and a power circuit. In an embodiment of the invention, certain pins of the microchip provided on the integrated card, communicates with the nano-chip operating in the range of 859MHz and 930MHz. The microchip also connects to the GSM/GPS/GPRS chip which uses GPS and GPRS to acquire a location, and to the GSM network to transmit said location to the blockchain platform. In an embodiment mode of the present invention, the GSM/GPS/GPRS chip also transmits the data from the nano-chip. The GSM/GPS/GPRS chip can acquire location both through GPS and GPRS since it contains both, still GPS is the first choice for precise and accurate location determination. Two antennas are provided, which are linked to the integrated card and then connected to the GSM/GPS/GPRS chip.

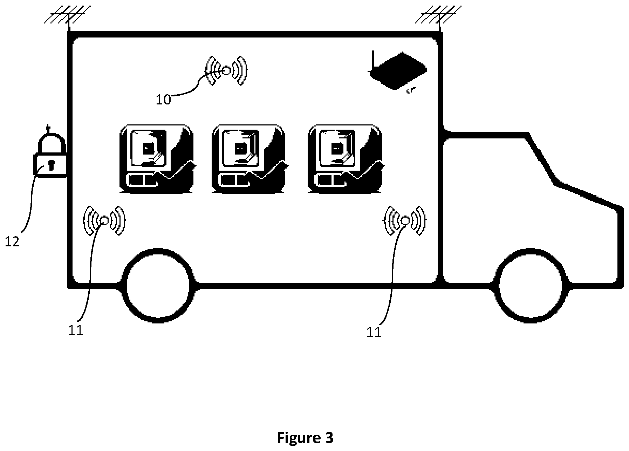

Figure 3 shows the main device as loaded on a transporter such as a truck or a container. There are three security sensors operating with the device depending on the mode of transport. The CO₂ sensor (10) has sufficient precision to determine whether there is a person in the truck or container. The magnetic door lock allows controlling entry to or exit from the truck or container. The tension sensor (11) on the covers of the truck trailer enables the user to determine whether the covers are broken. Another element of the main monitoring device is the power circuit. While the main box tracks the data from the sensors, it sends the location and tag identifier data to the blockchain platform in five minute intervals.

The process begins with the tags being loaded on the truck or container. Then the door is locked by the magnetic door sensor (12). In land transportation, the tension (11) and CO₂ sensors (10) are activated. Then the main device is reactivated, sending location and tag identifier information. The operational condition of the GPS is checked and, if it is not operative, first the GPRS and then the GSM applications are checked. Location and tag identifier information is saved in the built-in memory if the GSM is not operative. After this, all sensors, namely the CO₂ sensor (10), magnetic door sensor (12) and the trailer cover tension sensor (11) are checked respectively, and if they are not operative, the user is warned by a preferred method. After waiting for a period of time determined by the user or preferably for 5 minutes, the main device begins operating again and all steps are repeated.

If the GPS is operative, GSM applications are checked. Location and tag identifier information are saved in the built-in memory if the GSM is not operative. After this, all sensors, namely the CO₂ sensor (10), magnetic door sensor (12) and the trailer cover tension sensor (11) are checked respectively, and if they are not operative, the user is warned by a preferred method. After waiting for a period of time determined by the user or preferably for 5 minutes, the main device begins operating again and all steps are repeated. If the GSM is operative, the process of sending GPS location and tag identifier data is executed. After this, the related sensors are checked again and feedback is performed after waiting for a period of time determined by the user or preferably for 5 minutes, the main device begins operating again and all steps are repeated.

In an embodiment mode of the invention, trailer cover tension sensors (11) are not utilized in maritime transportation and the CO₂ sensor (10) applied to the container is not required to be repeatedly checked after the GSM application.

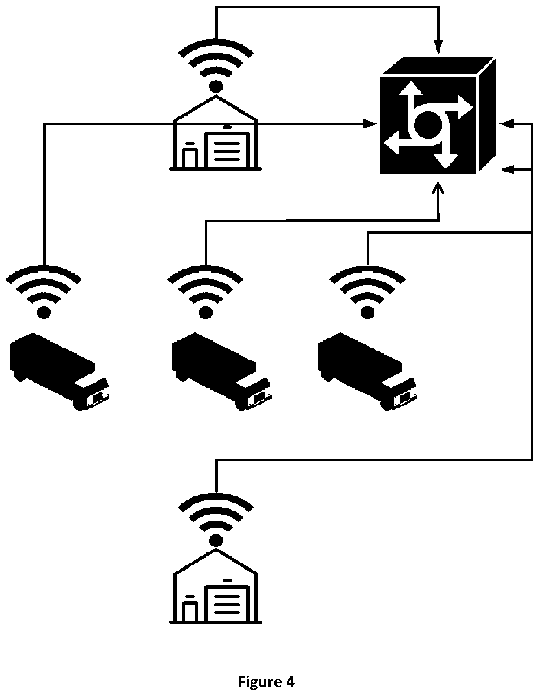

Figure 4 shows the general communication between the departure station and the destination station. According to an embodiment of the present invention, data are processed, which are derived from the packing list preferably in XML or JSON formats loaded by the transporter on to the blockchain platform. Relevant data include name, quantity and weight of the item. The packing list information are transmitted to the handheld device provided to the person at the departing warehouse or port. The data is transmitted via the Internet by using the locally connected blockchain platform, and the handheld device has 3G connection. The final stage of the operation begins when the vehicle enters the destination warehouse. Predefined warehouse geo-locations are sent in the form of a warning to the user by means of the main box using the GSM/GPS/GPRS chip to receive the locations and send data. When the assets begin to be unloaded from the truck and enter the warehouse, the RFID readers disposed on the warehouse doors or provided as portable handheld RFID readers, read the tags, unlocking and removing their locks. Thus, the user is informed that the assets have safely reached the warehouse without any interactions.

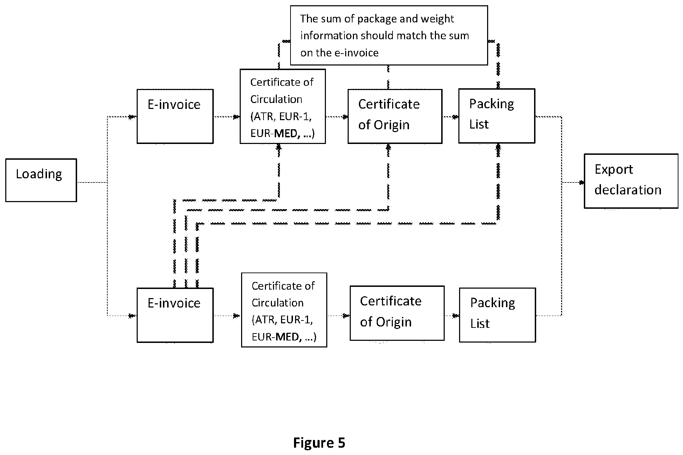

Figure 5 shows the export flow tracked from loading until creation of the export declaration. It can be seen in the figure that an e-invoice, certificate of circulation, certificate of origin and a packing list can be issued in the form of combined documents. Documents issued in the form of combined documents may have separate delivery addresses. An export declaration can be issued on the basis of each e-invoice, or a single export declaration can be issued for a plurality of e-invoices or a plurality of vehicles. The country of trade and the country of shipment may differ from each other in the export declaration. The sum of the information such as the number and weight specified in the circulation certificate, certificate of origin and the packing list, should match the amount shown on the e-invoice.

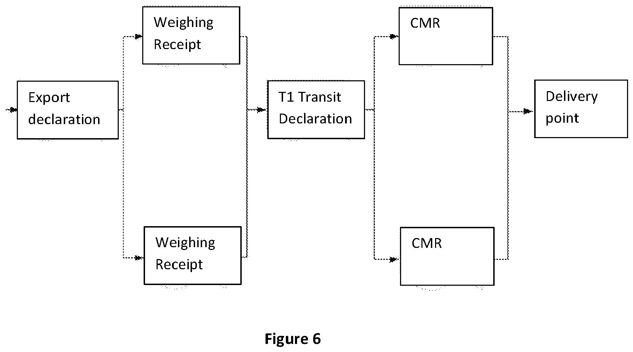

Figure 6 shows the export flow followed from the creation of the export declaration to the delivery point. If an export declaration covers more than one vehicle, the T1 declaration for the same operation is issued as 2 separate declarations (on vehicle basis). In case of different delivery points, separate T1 declarations are issued. In multiple e-invoices, the same declaration cannot be registered with different currency types, different payment methods and delivery methods. Regulations allow having more than one recipient and sender. However, this has no example in practice. In the export declaration, the country of trade and the country of shipment may differ from each other. A single export declaration can be issued for more than one vehicle. If there is more than one vehicle, weighing receipts are issued per vehicle. For partial loads, a T1 transit declaration can be issued per vehicle or per export declaration. If an export declaration covers more than one vehicle, as many T1 transit declarations are issued as the number of vehicles. T1 transit declaration is opened up to a single destination customs, a separate T1 transit declaration is issued if the goods are delivered to different customs points.

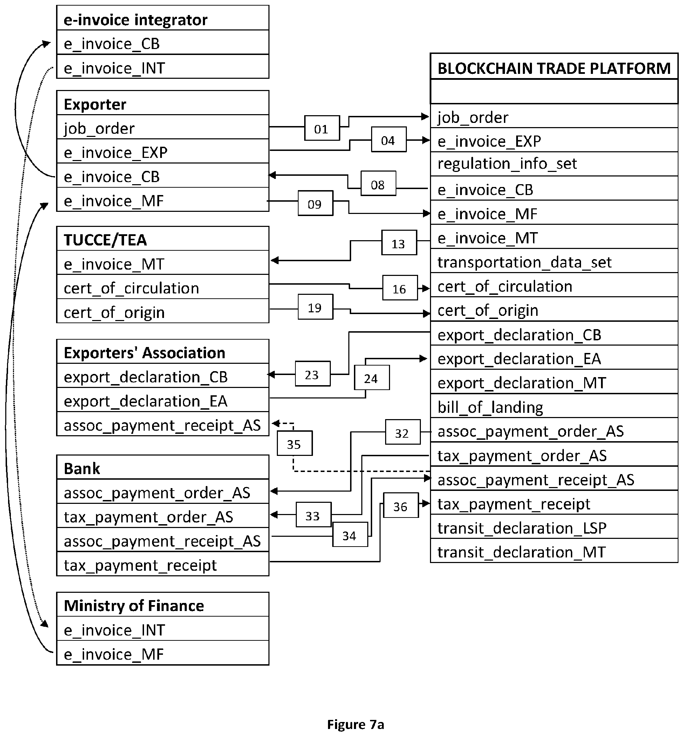

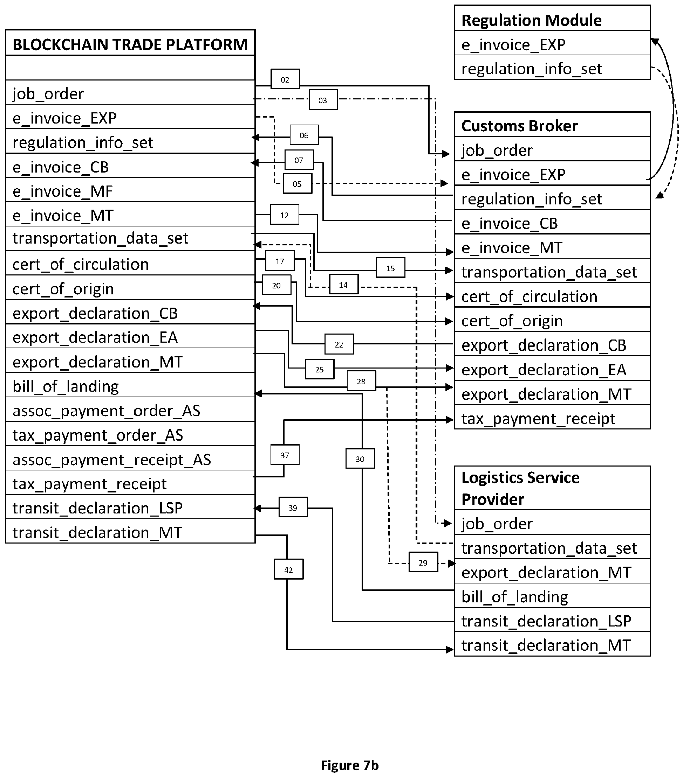

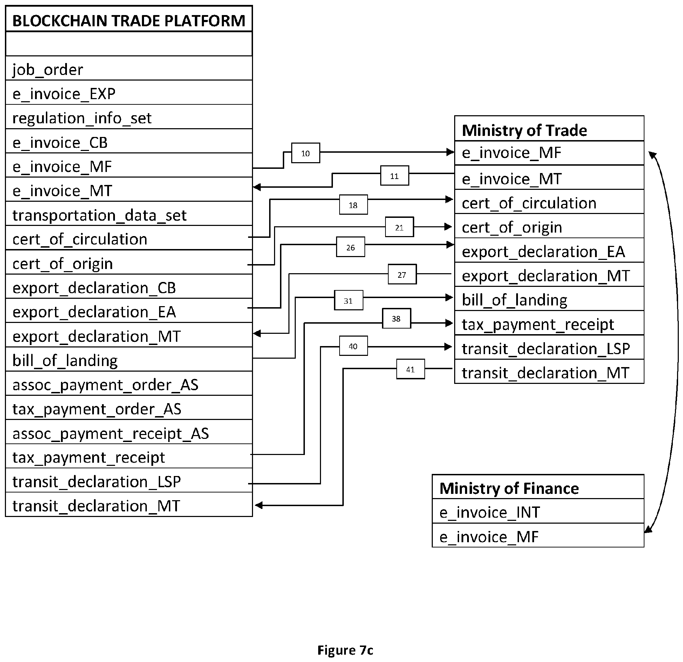

As shown on the blockchain in Figure 7a, 7b and 7c digital transformation is performed in a such way that the source and target of the documents are designated. The path can be seen which the documents and information used in the blockchain platform follow between the exporter, TUCCE (Turkish Union of Chambers and Commodity Exchanges) / TEA (Turkish Exporters Assembly), exporters' association, bank, the Ministry of Finance, customs broker, logistics service provider and the Ministry of Trade. Document management preferably occurs in the order displayed in the figure and the direction of the arrows displays the sender and recipient of the information or document. In an embodiment mode of the present invention, the condition by which the copy of the e-invoice indicated by e_fatura_MB is communicated, without using the blockchain platform, between the Ministry of Finance and the Ministry of Commerce, is included as optional.

## Claims

1. A main device adapted for use in logistic applications and in data communication with a blockchain platform, comprising at least one integrated card, at least one nano-chip, at least one GSM/GPS/GPRS chip, at least one SIM card, at least one passive GPS antenna, at least one GSM antenna, at least one RFID antenna and a power circuit, **characterized in that**
• said main device comprises at least one CO₂ sensor (10),
• said main device comprises at least one magnetic door sensor (12),
• said main device switching to the GPRS system when GPS data is inaccessible
• said main device dynamically updates the RFID tags provided as associated with the asset, with information received from the blockchain platform and sends said data together with the data received from said sensors, to the blockchain platform.

2. A main device according to Claim 1, **characterized in that** said main device comprises at least one tension sensor (11).

3. A main device according to any one of the preceding claims, **characterized in that**, while monitoring the data on said sensors, the main device sends the location and tag identifier data to the blockchain platform in time intervals preferred by the user.

4. A method adapted for use in logistic applications, **characterized by** comprising the steps of
reading a value associated with a valid location of the asset, from a tag identifier associated with the asset provided on a tag attached to an asset, by means of a reader in communication with a blockchain platform, storing the tag identifier and data values on the tag and on the blockchain platform,
reading CO₂ sensor (10) and magnetic door sensor (12) information by means of a main device in communication with a blockchain platform, in intervals determined by the user and storing this information on the blockchain platform,
generating a new data value relating to the asset being transferred to a new location and storing the new data value on the blockchain platform,
transmitting a request including tag identifier, data value and new data values, to update the asset state stored on the blockchain platform,
obtaining a request-based verification confirmation from the blockchain platform, and
in response to the verification confirmation, dynamically updating the tag having asset state updated from the blockchain platform and new data value from the blockchain platform.

## Patentansprüche

1. Hauptvorrichtung, geeignet zur Verwendung in logistischen Anwendungen und in der Datenkommunikation mit einer Blockchain-Plattform, umfassend mindestens eine integrierte Karte, mindestens einen Nano-Chip, mindestens einen GSM/GPS/GPRS-Chip, mindestens eine SIM-Karte, mindestens eine passive GPS-Antenne, mindestens eine GSM-Antenne, mindestens eine RFID-Antenne und einen Stromkreis, **dadurch gekennzeichnet, dass**
- die Hauptvorrichtung mindestens einen C0₂-Sensor (10) umfasst,
- die Hauptvorrichtung mindestens einen magnetischen Türsensor (12) umfasst,
- die Hauptvorrichtung auf das GPRS-System umschaltet, wenn kein Zugriff auf GPS-Daten möglich ist,
- die Hauptvorrichtung die RFID-Etiketten, die dem Transportgut zugeordnet sind, dynamisch mit von der Blockchain-Plattform empfangenen Informationen aktualisiert und diese Daten zusammen mit den von den Sensoren empfangenen Daten an die Blockchain-Plattform sendet.

2. Hauptvorrichtung nach Anspruch 1, **dadurch gekennzeichnet, dass** die Hauptvorrichtung mindestens einen Spannungssensor (11) umfasst.

3. Hauptvorrichtung nach einem der vorhergehenden Ansprüche, **dadurch gekennzeichnet, dass** unter Überwachung der Daten der Sensoren, die Hauptvorrichtung die Daten des Orts und des Etiketten-Identifikators in vom Benutzer bevorzugten Zeitintervallen an die Blockchain-Plattform sendet.

4. Verfahren, das zur Verwendung in logistischen Anwendungen geeignet ist, **dadurch gekennzeichnet, dass** es die folgenden Schritte umfasst:
Auslesen eines, einem gültigen Ort des Transportguts zugeordneten Wertes aus einem Etiketten-Identifikator, der dem Transportgut zugeordnet ist und auf einem an einem Transportgut angebrachten Etikett bereitgestellt ist, mittels eines Lesegeräts in Kommunikation mit einer Blockchain-Plattform, Speichern des Etiketten-Identifikators und der Datenwerte auf dem Etikett und auf der Blockchain-Plattform,
Auslesen von Informationen des C0₂-Sensors (10) und des magnetischen Türsensors (12) mittels einer Hauptvorrichtung in Kommunikation mit einer Blockchain-Plattform, in vom Benutzer bestimmten Intervallen und Speichern dieser Informationen auf der Blockchain-Plattform,
Erzeugen eines neuen Datenwerts, der sich auf das Transportgut bezieht, das an einen neuen Ort transportiert wird, und Speichern des neuen Datenwerts auf der Blockchain-Plattform, Übertragen einer Anforderung, die einen Etiketten-Identifikator, einen Datenwert und neue Datenwerte enthält, um den auf der Blockchain-Plattform gespeicherten Status des Transportguts zu aktualisieren,
Erhalten einer anforderungsbasierten Verifizierungsbestätigung von der Blockchain-Plattform, und
als Reaktion auf die Verifizierungsbestätigung dynamisches Aktualisieren des Etiketts mit dem von der Blockchain-Plattform aktualisierten Status des Transportguts und den neuen Datenwerten der Blockchain-Plattform.

## Revendications

1. Dispositif principal adapté à l'utilisation dans des applications logistiques et en communication de données avec une plateforme blockchain, comprenant au moins une carte intégrée, au moins une nanopuce, au moins une puce GSM/GPS/GPRS, au moins une carte SIM, au moins une antenne GPS passive, au moins une antenne GSM, au moins une antenne RFID et un circuit électrique, **caractérisé en ce que**
- ledit dispositif principal comprend au moins un capteur de C0₂ (10),
- ledit dispositif principal comprend au moins un capteur magnétique de porte (12),
- ledit appareil principal passe au système GPRS lorsque les données GPS sont inaccessibles,
- ledit dispositif principal actualise dynamiquement les étiquettes RFID fournies comme étant associées à la marchandise, à l'aide des informations reçues de la plateforme blockchain, et envoie ces données, ainsi que les données reçues des capteurs, à la plateforme blockchain.

2. Dispositif principal selon la revendication 1, **caractérisé en ce que** ledit dispositif principal comprend au moins un capteur de tension (11).

3. Dispositif principal selon l'une quelconque des revendications précédentes, **caractérisé en ce que**, tout en surveillant les données sur lesdits capteurs, le dispositif principal envoie les données de géolocalisation et d'identifiant d'étiquette à la plateforme blockchain à des intervalles de temps préférés par l'utilisateur.

4. Méthode adaptée à une utilisation dans des applications logistiques, **caractérisée par** les étapes suivantes :
lire une valeur associée à un endroit valide de la marchandise, à partir d'un identifiant d'étiquette associé à la marchandise fourni sur une étiquette attachée à une marchandise, au moyen d'un lecteur en communication avec une plateforme blockchain, stocker l'identifiant d'étiquette et les valeurs de données sur l'étiquette et sur la plateforme blockchain,
lire les informations du capteur de C0₂ (10) et du capteur de porte magnétique (12) au moyen d'un dispositif principal en communication avec une plateforme blockchain, à des intervalles déterminés par l'utilisateur, et stocker ces informations sur la plateforme blockchain,
générer une nouvelle valeur de données relative à la marchandise transportée vers un nouvel endroit et stocker la nouvelle valeur de données sur la plateforme blockchain, transmettre une demande comprenant l'identifiant d'étiquette, la valeur de données et les nouvelles valeurs de données, afin d'actualiser l'état de la marchandise stocké sur la plateforme blockchain,
obtenir une confirmation de vérification basée sur la demande de la part de la plateforme blockchain, et
en réponse à la confirmation de la vérification, actualiser dynamiquement l'étiquette avec l'état de la marchandise actualisé par la plateforme blockchain et la nouvelle valeur des données provenant de la plateforme blockchain.
